# EUROPEAN PATENT APPLICATION

(11) **EP 1 036 492 A1**
(43) Date of publication of application: **20.09.2000**
(21) Application number: 99105217.6
(22) Date of filing: 13.03.1999
(51) Int. Cl.: A01C 1/06

(54) **Seed treatment composition**

(71) Applicant: Aventis Research & Technologies GmbH & Co. KG, 65926 Frankfurt am Main (DE)
(72) Inventor: Kretzschmar, Gerhard, Dr., 65760 Eschborn (DE)

(57) **Abstract**

An aqueous film forming seed treatment composition comprising
a. 5-50 wt.-% of a film forming crosslinked proteinaceous material and
b. 0.001-50 wt.-% of other active ingredients selected from the following group: pesticides, fertilisers, bioregulating additives, additives for increasing the fertiliser efficiency, plant productivity, growth and nutrient accumulation and adjuvants or any combination thereof.

## Description

The present invention relates to novel seed treatment compositions containing a film-forming, crosslinked protein and optionally at least one pesticide and optionally other agricultural adjuvants, and methods of using such compositions for seed treatments, especially in the control and prevention of disease infestation on seed and seedlings and to increase seedling vigour and plant growth.

### Background of the invention

One of the most challenging task for mankind is to provide sufficient food for an ever increasing world population. The situation has recently been described by the chief executive of the world Food and Agricultural Organisation (FAO), Jacques Diouf, during his visit in Caracas (source: 3/5/98 8:46:00 AM Caracas dpa/CNS-W): According to the FAO, investments of about $ 300 billion in the agricultural sector will be necessary to fight against world-wide famine, since more than 840 million people have only limited supply of food. This huge amount of money would be required to halve the number of people starving by the year 2015. Clearly, this goal can not be reached by constantly extending agricultural areas or spending more money on fertilisers, but only by increasing agricultural productivity per given arable land. Because of the predicted growth of world population and the limited land resources, inventions to increase plant growth and productivity, especially to enhance crop growth and productivity are urgently required.

The present invention relates to increase plant growth and productivity, especially of commercially most important crops like wheat, corn, soy and rice, by the treatment of seeds with compositions effecting enhanced seedling vigour and plant growth. The methods of the invention can be employed to increase the plants vegetative and reproductive growth.

The successful establishment of crops from seed depends on a broad array of factors including the species sown, the inherent vigour of the seeds, the soil type and its fertility, the climatic conditions, the time of year, sowing depth, soil tilth, method of soil cultivation and sowing, and the presence or absence of antagonistic or beneficial organisms such as weeds, insects, diseases, rhizobia, or mycorrhizas. Farmers have an opportunity to control only some of these factors; many factors remain uncontrolled and can, either singly or in combination, cause a delay or reduction in establishment. Commonly, farmers attempt to overcome some of these adverse conditions by applying materials such as herbicides and fertilisers to the whole area of land to be planted. Such broad-acre applications can be expensive and there is a risk of considerable financial loss if establishment is inadequate or fails altogether. An alternative approach is to apply materials either in "bands" adjacent to the seed or on the seeds themselves in seed "coatings" in an effort to increase the effectiveness of the treatments. Seed coating is a mechanism of applying needed materials in such a way that they affect the seed or soil at the seed-soil interface. Thus, seed coating provides an opportunity to package effective quantities of materials such that they can influence the microenvironment of each seed. By not having to treat the remaining bulk of their soil, farmers may be able to save on the inputs required and the associated costs of applying them. Because seed coatings offer such opportunities for cost saving and increasing effectiveness, they have been studied widely for many years and yet, with some exceptions (for example, coating of sugarbeet and some vegetable seeds, fungicide and insecticide seed treatment of grain crops, and inoculant coatings on legume seeds), much of the world's crops seed is still sown without treatment. The urgent need for improved seed treatments formulations being generally acknowledged, production experts are saying that two of the most crucial factors in obtaining maximum yields are seed emergence and stand establishment (http://www.gustafson.com).

Since the objective of seed treatments is to protect the seed and the seedling during their most susceptible development stages and the method is well targeted using low rates of pesticides per hectare, this application method is regarded to be an Integrated Pest Management (IPM) compatible technology. A most recent review covering scientific and patent literature about the state of the art in ,,Seed treatments and Coatings and their Effects on Plant Establishment,, is dealing with these issues (James M.Scott, Advances in Agronomy, Vol. 42, 1989, pages 43-83) and incorporated herein as a reference. It states that in spite of a considerable amount of research, reliable and effective seed treatments are not currently available for many crops. The state of the art in seed treatment technology described there is incorporated in this patent description as a reference, in particular the terminology and definitions of seed treatments and the state of the art about the seed treatment processes to facilitate planting, inoculant, protective, nutrient and pesticide coatings.
In the following, either of the general terms ,,seed treatment,, and ,,seed coating,, are used without making restrictions to the invented compositions and their use to treat seeds by any of the specific methods described in the literature in order to provide increasing seedling vigour. The commonly used ingredients in seed treatment compositions (sometimes designated as formulations) may be assigned to either of the following five categories a)-e):
a) fungicides, insecticides, acaricides, antidotes, safener
b) fertilisers, micronutrients, inoculants
c) bioregulators of natural or synthetic origin which are either hormones or interfere in hormone metabolism and do not influence plant nutrition
d) bioregulators which interfere with plant growth by diverse, mostly unknown mechanisms, which may be related for instance to enhanced nutrient uptake
e) adjuvants which provide certain physical properties to the formulation, to the treatment appearance and properties, to the seeds or to the soil or aerial environment.

A seed treatment compositions typical for the current state-of-the-art is described in WO 98/57543 (page 6, by Novartis) to be a suspension concentrate containing 40% active ingredients (category a), 10% propylene glycol (category e), 6% of nonylphenol polyethylene glycol ether (category e), 10% sodium lignosulfate (category e), 1 % carboxymethylcellulose (category e), 1 % silicone oil (category e), and 32% water (continuous phase).

Another example for a fungicide seed treatment composition typical for the current state-of-the-art is described by U.Simmen at al. in Soil Biol.Biochem., Vol 30, No.4, 517-522, 1998 (page 518) where a wettable powder of cyproconazole (category a) is just mixed with polyvinylpyrrolidone (category e) and shaken in a rotating machine.

Another example for an insecticide seed treatment composition typical for the current state-of-the-art is described by P.J. Mulqueen at al. in Pestic.Sci., 1990, 29, 541-465 (page 463). It contains a non-renewable surfactant/latex composition for oil seed rape treatment.

Another example for a seed treatment composition typical for the current state-of-the-art is described in DE 4417555 (Bayer AG) where water-soluble polysaccharides, in particular gel-forming carraagheenans were used.

Another example for a seed treatment composition typical for the current state-of-the-art is described in EP 0539332 (Sandoz LTD.) where active carbon, kaolin clay and a vinylacetate-ethylene copolymer were used to prepare seed dressing formulations.

A few cases are known where proteins or polyamino acids were used as additives in seed treatment compositions like casein (category e) and rhizobia bacteria (category b) (US 4,149,869, Coated Seed Ltd.).

James M.Scott (Advances in Agronomy, Vol. 42, 1989, page 51) described the use of water-soluble gelatine and casein (category e) with adhesive properties to provide a better environment for the survival of rhizobia (category b) following seed inoculation, and alternatively methyl cellulose and gum arabic (category e) could be used here.

Another example for a seed treatment composition containing gelatine is provided with WO 97/36471 (Monsanto Company). In this application food-grade gelatine was used as an additive to prepare seed coatings. However, no means are provided to prepare a water-insoluble, film-forming protein matrix (see comparison example).

The polyaspartates described in WO 98/30100 (page 5) which are polyamino acids and thus may be considered as proteins in a broader sense, are crosslinked to an amount limited to the extent that the water-solubility of the crosslinked homogeneous polyaspartic acid is not materially affected.

### Description of the invention

Surprisingly it has been found that seed treatment and coating formulations prepared from crosslinked proteins provide an efficient plant growth promoting composition and a controlled delivery matrix for pesticides, micronutrients, bioregulators or combinations thereof.

The present invention relates to an aqueous film forming seed treatment composition comprising
- a. 5-50 wt.-%, preferably 5-25.wt% of a film forming crosslinked proteinaceous material and
- b. 0.001-50 wt.-%, preferably 0.1-40 wt% of other active ingredients selected from the following group: pesticides, fertilisers, bioregulating additives, additives for increasing the fertiliser efficiency, plant productivity, growth and nutrient accumulation and adjuvants or any combination thereof. The present invention further relates to a method for preparing said seed treatment composition.

Neither of the known seed treatment compositions hitherto described provides a crosslinked, water-resistant film-forming protein matrix covering the seed surface according to the present invention. In particular, neither of such known compositions contains the appropriate crosslinking agents to provide the required water-resistant, film-forming protein matrix surface according to the present invention. Very surprisingly, the said seed treatment and coating formulations provides enhanced seedling vigour and plant growth. Such enhancements were not to be expected from the film forming treatment composition alone. Furthermore, the compositions are useful to entrap pesticides and other adjuvants to provide control and prevention of disease infestation on seed and seedlings to further enhance the seedling vigour and crop yields.

The invented composition is easily and cheaply available from renewable protein resources by efficient crosslinking of the proteins and by addition of certain auxiliary additives. The resulting dispersions are then mixed with the respective components that belong to either of the above mentioned five categories a)-e) onto the seeds by using a standard seed treatment equipment.

According to the invention, the treated seeds hereby are covered with a protective, hard, micrometer-thin film which simultaneously provides a plant growth promoting composition and a controlled delivery matrix for active ingredients belonging to the category (a)-(d) additives listed above. These additives may be either synthetic or natural, known or novel pesticides or plant growth promoting agents.

Advantageously, the water-insoluble cross-linked protein matrix described in this invention encloses one or several components, regardless their water solubility, providing a sustained release matrix. This release matrix offers distinct advantages over the prior art compositions by sustained release of the water-soluble or - insoluble pesticides, micronutrients and adjuvants by physically preventing their rapid release and other potential leaching losses by environmental influences like rain and humidity. A sustained release of active ingredients reduces the size of the seed dressing zone thus resulting in a higher efficacy of the respective active ingredients. Moreover, a delay in active ingredients release and accumulation can reduce the potential phytotoxicity to the seedlings.

Thus the invention relates to seed treatment compositions containing the following 7 components:
1. the film-forming, crosslinked protein dispersion
2. auxiliary additives required to prepare component (1)
3. optionally in addition an ingredient of the category a)
4. optionally in addition an ingredient of the category b)
5. optionally in addition an ingredient of the category c)
6. optionally in addition an ingredient of the category d)
7. optionally in addition an ingredient of the category e)

The compositions are prepared by mixing appropriate amounts of the respective components 1-7 so that they provide maximum effects of enhanced seedling vigour and crop protection when the seeds are sown. Other advantages are the accurate dosing of the components 2-7, the free flow of seeds in seed drills and reduced hazards to operators and farmers due to the high retention of components on seeds. Both low-dose (up to 0.1 g active ingredient / kg seed) and high-dose (up to 150 g a. i. / kg seed) can be applied by this technique. The compositions are used to treat seeds prior to storage with insecticides, fungicides or nematicides to ward off external agents of seed damage and for pre-sowing to prevent seedling damage during germination. In particular, the treatments not only remove the pathogens from the seeds but also prevent the soil-borne ones from invading the germinating seeds and may avoid several foliar sprays before harvest. The beneficial effect on seedling vigour and plant growth of a seed treatment according to the invention can be determined by measuring an increase in plant length and/or weight.

The components 1-7 are described more in detail as follows:

### Component (1): Film-forming, crosslinked protein dispersion

The proteinaceous material to be used in the process of the invention can be derived from any natural animal-, plant- and/or microbe-derived protein such as keratin, gelatine, collagen, gluten, soy protein, casein, etc., or any combination thereof. The proteinaceous raw material may be pre-treated in order to obtain a dispersible protein in the aqueous medium. Such pre-treatment may be performed by well known procedures, like denaturation by treatment with heat, by acid or alkaline hydrolysis resulting in reduced molecular weights through hydrolysis in the main chains, by deamidation of glutamine and asparagine residues through hydrolysis in the side chains, in acidic or alkaline medium resulting in increased dispersibility or solubility, or by adding one or several of the appropriate auxiliary additives (components 2). It is equally well known that the processing of certain proteins, like soy protein can be improved by treating the protein with a reducing agent to enhance the dispersability of the protein. The reducing agent e.g. may be an (alkali metal) sulfite, an (alkali metal) bisulfite or hydrogen sulfide to cleave the disulfide bonds in the protein molecule to SH-groups and thus increasing the protein dispersibility. The proteinaceous material can also be pre-treated by a proteolytic enzyme. In order to obtain optimised protein dispersions in terms of film properties and cost of raw materials, blends of the respective proteins, e.g. casein/soy protein, gelatine/casein, casein/gluten, soy protein/gluten/casein may be used likewise as raw materials.

The term "cross-linked" according to the invention refers to a heterogeneous film-forming protein dispersion prepared from such aqueous protein dispersion by means of crosslinkers used in the resins industry. Suitable additional crosslinking or curing agents include aldehydes such as formaldehyde, glyoxal and glutaraldehyde, diisocyanate, (poly)isocyanates, bis(meth)acrylates such as N,N-ethylenebis(meth)acrylate, (poly)aziridines, carbodiimides, resins such as melamine-formaldehyde (MF), urea-formaldehyde (UF) or benzoguanidine-formaldehyde, epoxides such as epichlorohydrin, polyepoxide-polyamine or polyepoxide-polyamidoamine, or diglycidyl ether, a glycidyl ester, or their polymer derivatives such as cationic polyepoxides, polyvalent cations such as calcium or zinc, acetoacetates, enzymatic crosslinkers, or other homo-bifunctional, heterobifunctional or polyfunctional reagents capable of reacting with functional groups present in proteins. The preferred crosslinking or curing agents are glyoxal, glutaraldehyde, polyisocyanates, bis(meth)acrylates such as N,N-ethylenebis(meth)acrylamide, carbodiimides, MF- or UF-resins and (poly)epoxides and polyaziridines, mostly preferred are glyoxal, polyisocyanates, polyepoxides and polyaziridines, and particularly preferred are the polyepoxides. Examples of polyisocyante crosslinkers include the TDI types Basonat PLR 8525® (BASF, Ludwigshafen, Germany), Desmodur L® (Bayer, Leverkusen, Germany), Polurene AD75® (Sapici, Caronno Pertusella VA, Italy), Tolunate HDB® (Rhone-Poulenc, Paris, France), HDI trimer type like Desmodur N 3300® (Bayer) or Basonat HI 100® (BASF), Beckocoat® (Hoechst, Frankfurt, Germany) and other commercial polyisocyanates which are usually mixtures of largely analogue compounds. The carbodiimides are usually the dehydrated urea compounds derived therefrom (Robert D. Athey in *Additives for water-borne coatings,* Part 7: Curatives, European Coatings Journal 11/1996, 569). The polyepoxide type crosslinkers are mainly derived from the O-and N-glycidyl-compounds and from glycidylesters. Typical examples for those include epoxy resins combined with di- or polyamines or polyamidoamines. Typical epoxy components include commercial products like Araldit® (Ciba, Basel, Switzerland), Beckopox® (Hoechst), D.E.R.® (DOW Chemical, USA), Epikote® (Shell, Netherlands), Epodil® (Anchor, Waterbury, Connecticut, USA), Eurepox® (Witco, USA), Grilonit® (Ems-Chemie Hldg AG, Switzerland), Kelpoxy® (Reichhold, Triangle Park, North Carolina, USA), Polycup172®, Polycup1884® , Kymene®, Kycoat23® (Hercules, Wilmington, DE, U.S.A.) and Resox® (Synthopol Chemie, Buxtehude, Germany), to name only a few, which are based for instance on glycidylethers, esters, epichlorohydrin, butane-1,4-diol-diglycidylether, monoglycidylethers and epichlorohydrin polyamide condensates from dicarboxylic acids and polyalkylene polyamines. The di- or polyamine or polyamidoamine components in these systems are usually used in modified form, for instance either by the reaction of di- or polyamines (alkylene amines) with mono- or dimeric fatty acids to polyaminoamides, by further reaction of the polyamidoamides with epoxides, e.g. with epichlorohydrin, or by the reaction of epoxy resins with the amines in a determined stoechiometry. The properties of these cationic products can be adjusted over wide ranges via the amines, epoxides and carboxylic acids used, and potential crosslinking activity for instance may be generated via azetidinium moieties by self-arresting inherent crosslinking via dilution, pH or the nature of the amino groups involved. Typically used amine components include polyamidoamine Type 250 Genamid® (Clariant AG, Muttenz, Switzerland), PAA adducts, EDA adducts (ethylenediamine), DETA adducts (diethylentriamine), TETA-adducts (triethylenetetramine). Most of these and other amine components are components of the two-pack EP coating systems, e.g. in Epilink® (Akzo, Arnhem, Netherlands), Polyamine® (Bayer), Araldit® (Ciba) and Beckopox H® (Hoechst), to name only a few.

A typical melamine-formaldehyde (MF) crosslinker resin for the preparation of a dispersion according to the invention is the water-dispersible resin UrecolSMV® (BASF, Leverkusen, Germany). Typical polyaziridine crosslinkers for the preparation of a dispersion according to the invention are the lONAC® type crosslinkers like PFAZ-322® (Sybron Chemicals, Birmingham, NJ, USA) or CX-100® (Zeneca, Waalwijk, Netherlands).

Typically, amounts of 0,1-25 wt. -% of crosslinking agents with respect to the dry protein weight are required. It may also be advantageous to use a combination of at least two different crosslinking agents, e.g. having specificity for different reactive groups, such as a (di)aldehyde to react with amino groups, a carbodiimide or a diamine to react with carboxyl groups, and a polyaziridine or polyepoxide to crosslink carboxy, amide, hydroxyl and amine groups in order to obtain improved overall results. The crosslinking systems used preferably are water-based and commercially available. The film forming properties, drying characteristics and rheology of the dispersions, and the appearance and mechanical properties and water resistance of the seed coatings/dressings are very much influenced by the choice and amount of the crosslinking agent(s). For example, glyoxal, which is one of the less preferred crosslinking agents, gives slightly yellow or even dark brown films with increasing amount of this reagent, whereas the polyaziridines and the particularly preferred polyepoxides give bright colourless films regardless of the amount of reagent used. Surprisingly, the preferred polyaziridines and the polyepoxides, if used separately or in combination with each other or with other crosslinkers, considerably enhance the water resistance of the films.

### Component (2): Auxiliary additives

In order to obtain the dispersible protein in aqueous medium, surface-active compounds, e.g. (sodium) dodecyl sulphate, and/or chaotropic agents such as urea, guanidine or guanidinium salts, calcium chloride and the like are used. Acids and or bases are usually required to properly adjust the pH value during the preparation of the dispersions and of the final formulation of the dispersions. In general, the use of volatile organic acids such as acetic acid, formic acid and volatile bases like ammonia is preferred, because non-volatile reagents are remaining as salts and may impart the water resistant properties of protein films. Plasticisers are polyols such as ethylene glycol, propylene glycol, glycerol, di- and polyethylene glycols, di- and polypropylene glycols, 2-methyl-1,3-propanediol, sugar alcohols such as sorbitol, mannitol, xylitol, isosorbide etc., hydroxyl acids such as lactic acid, citric acid and gluconic acid, hydroxyl esters such as lactic and citric acid monoalkyl esters, sugars such as glucose, fructose, saccharose and xylose. The plasticisers are used in particular in amounts of about 5-50 wt.-% with respect to the dry protein weight, preferably in amounts of about 10-30 wt.-%, most preferably about 20 wt.-%.

Suitable continuous phases as carriers are water or other solvents or water/solvent mixtures used in the art which in general are compatible with the environment. Preferably organic solvents like aromatic hydrocarbons (e.g. xylene, mixtures of substituted naphthalenes), phthalates (such as dibutyl phthalate or dioctyl phthalate), aliphatic hydrocarbons (cyclohexane or paraffins), alcohols and glycols and their ethers and esters (ethanol, ethylene glycol, ethylene glycol monomethyl or monoethyl ether), ketones (cyclohexanone), strongly polar solvents (N-methyl-2-pyrroildone, dimethyl sulfoxide or dimethylformamide), as used in standard seed treatment formulations, are avoided and only water is the preferred continuous phase to be used.

### Component (3): Ingredients of the category a)

The active ingredients of category a) can be used to inhibit or destroy the microorganisms which occur on plants or on parts of plants (the fruit, blossom, leaves, stems, tubers or roots) of different crops of useful plants to provide protection e.g. against fungus infections, phyto-pathogenic fungi which occur in the soil or plant pathogenic insects. The type of pathogen and plant determines the type of active ingredients to be used to prepare the compositions. The targeted pathogens include, but are not limited to phytopathogenic fungi like Ascomycetes (e.g. Venturia, Podosphaera, Erysiphe, Monilinia, Mycosphaerella, Uncinula); Basidiomycetes (e.g. Hemileia, Rhizoctonia, Puccinia); Fungi imperfecti (e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Bremia, Pythium, Plasmopara), Gaeumannomyces graminis (take-all), Erysiphe graminis (mildew). A wide variety of fungicides is available like the azoles, e.g. fluquinconazole (Agrevo), cyproconazole (Novartis), triticonazole (Rhone-Poulenc), the phenylpyrroles, e.g. fenpiclonil or fludioxonil (both Novartis) and other structural types like capropamide, fluthiamide, spiroxamin, (all Bayer AG), and the strobilurines (BASF AG), e.g. azoxystrobin. The active ingredients available have different trade names, e.g. spiroxamin is Impulse® for wheat, or capropamide is Win® for rice. Vitavax® contains carboxin and thiram to treat wheat, barley and oat seeds, Baytan R30® protects against septoria, mildew or take-all. Tebuconazole is the a. i. in Raxil® to protect wheat, barley and oats. Further examples are given by the product providers, e.g. by the catalogue of Gustavson Inc. (http://www.gustafson.com/). Treating seeds with systemic insecticides is useful to control insects which attack the plant at the seedling stage. A wide variety of such agents is available, e.g. carbofuran, bendiocarb, lindane or imidacloprid. The active ingredients available have different trade names, e.g.imidacloprid is contained in Gaucho® (Bayer AG) in particular to protect wheat, corn and barley seeds. An alternative pesticide is Fipronil® (Rhone-Poulenc), the prototype for phenylpyrazole insecticides for instance for rice seed treatment.

The active ingredients of category a) may be pesticide mixtures with synergistically enhanced action, especially in the control and prevention of disease infestation on seeds and seedlings. Such mixtures comprise at least two active components (e.g. fungicides or insecticides). The synergistically enhanced action of mixtures provides lower disease infestation, lower doses of application, a longer duration of action and thus altogether increased crop yields not being expected from the sum of the actions of the individual components.

Examples for synergistic fungicidal mixtures are provided e.g. in WO 98/57543 (Novartis),
wherein suitable components may be
- fludioxonil (The Pesticide Manual, 10th. edition, 1994, 326);
- triticonazole) (The Pesticide Manual, 10th. edition, 1994, 712);
- cyproconazole (The Pesticide Manual, 10th. edition, 1994, 183).
- cyprodinil (The Pesticide Manual, 10th. edition, 1994, 109).
- R-metalaxyl
- flutriafol.

Further examples are given in FR 275442 (Rhone-Poulenc) for synergistic fungicides containing strobilurine and azoxystrobin. An extensive list of seeds, and active ingredients with brand names and suppliers is given in WO 97/36471 (pages 6-11; Monsanto Company) which is incorporated herein as a reference.

### Component (4): Ingredients of the category b)

Examples for fertilisers are the commercially available NPK-fertilisers. Micronutrients include e.g. calcium, magnesium, sulfur, manganese, zinc, copper, iron, boron.

### Component (5): Ingredients of the category c)

Examples for bioregulating additives, see: Bioregulatoren für Pflanzen, Chemische Rundschau Nr.17, 18.9.1997, page 21. Other bioregulators for example are the brassinosteroids, cytokinines like kinetin or zeatin, the auxins like indolylacetic acid or indolylacetyl aspartate, the flavonoids and isoflavanoids like formononetin or diosmetin, the phytoalxins like glyceolline, phytoalexin-inducing oligosaccharides like pectin, chitin, chitosan, polygalacuronic acid, oligogalacturonic acid, compounds like the gibellerins produced by rhizobial symbionts and endophytic microorganisms like *acetobacter diazotrophicus* or *herbaspirillum seropedicae* or the rhizobial inoculants producing such kind of compounds.

### Component (6): Ingredients of the category d)

Examples for additives for increasing fertiliser efficiency, plant productivity, growth, and nutrient accumulation are the commercially available products Auxigrow® (Auxein Corp., Lansing, Ml, USA) and Amisorb® (Donlar Corp., Chicago) or the so-called phytochelates described by A.M. Kinnersley in Plant Growth Regul. (1993), 12(3), 207-18, which are described to influence the availability for minimal amounts of certain metals (Zn, Fe, Cu, etc.) for optimal growth and productivity. Examples for the latter are polymers of L-lactic acid, L-lactoyllactic acid or the water-soluble polyaspartates.

### Component (7): Ingredients of the category e)

A large variety of adjuvants are available and contained in commercial agrochemical formulations. An overview is provided by Chester L.Foy in Pestic. Sci., 1993, 38, 65-76 and e.g. in EP 0357559 (Ciba-Geigy AG) for seed treatment formulations. The compositions of the invention may contain the usual ingredients recommended for seed treatment formulations, in particular agents with wetting, dispersing and defoaming mode of action. Suitable surface-active compounds are non-ionic, cationic and/or anionic surfactants having good emulsifying, dispersing and wetting properties. These adjuvants for crop protection formulations are provided by the fine chemicals producers, e.g. by Clariant AG (Muttenz, Switzerland) the (fatty)alcohol alkylphenol ethoxylates, the polyarylphenol ethoxylates, dispersing phosphates, taurides or alcohol monosuccinates. The term "surfactants,, also comprises mixtures of surfactants and natural or synthetic phospholipids of the cephatin and lecithin series, e.g. phosphatidyl-ethanolamine, phosphatidylserine, phosphatidylglycerol, lysolecithin sugar esters. A typical defoamer is Fluowet PL80B® (Clariant AG) and typical antifreeze compounds are glycols and polyethylene glycols. Further ingredients are solid or liquid substances ordinarily employed in formulation technology, e.g. natural or regenerated mineral, tackifiers, thickeners or binders. Solid carriers used are normally natural mineral fillers, such as calcite, talcum, kaolin, montmorillonite or highly dispersed silicic acid in order to improve the required physical properties. Other suitable additives are emulgating protein hydrolysates, e.g. as used in EP 0297426 (Bayer AG). The dyes conveniently taken for seed treatment compositions, either water-insoluble or water-soluble dyes if required to distinguish coated from uncoated seeds may be used. Examples include Colanyl Red® (Clariant AG, Muttenz), Rhodamin B, white pigment (titanium dioxide) or Luconyl® (BASF AG). Such and other additives and aids are known to those skilled in the art. Altogether they may be used to ensure that the formulation disperses well, does not settle or freeze and differentiates the seeds from untreated seeds. Other ingredients comprised by this category are special additives which are known to enhance seedling vigour in particular in combination with certain pesticides, e.g. fungicides in combination with 3',4',5', 6'-tetrachloro-2,4,5,7-tetraiodofluoresceine (EP 0297 426, Bayer AG).

The ingredients of the seed treatment formulation are applied to the seeds in a combined amount effective, preferably synergistically effective, to increase seedling vigour and plant growth. An objective of the present invention is to provide means to reduce to a minimum the amount of either of the components 1-7. A preferred objective of the present invention is to provide means to reduce to a minimum the amount of the crop protection agents (component 3) to be used. Hereby several pesticides may be included to protect the plant from pests and plant diseases.

Furthermore the invention encompasses the process to apply the described seed treatment compositions. Usually the seed treatment composition containing the crosslinked film-forming protein and one or more of the components 3-7 are applied to the seeds by means of the appropriate device. Typical devices to be used for the seed treatment are agricultural seed treaters like the Plantector, Mist-O-matic, Rotostat or Centaur, which are described in detail by R.B. Maude in Pesticide Outlook (1990), 1 (4), 16-22. Likewise special semi-continuous or continuous coating units e.g. based on certain continuous flow systems may be used (Nickerson Seeds, UK). The compositions of the invention are obtained in a more or less viscous form, depending on the type and amounts of the components 1-7. Preferred compositions are directly sprayable dispersions, dilutable solutions or dilute emulsions to be applied onto the seeds by the standard commercial seed treatment machines. As with the nature of these components, the methods of application, such as coating by spraying, atomising, dusting, scattering or pouring, are chosen in accordance with the intended objectives and the prevailing circumstances.

Advantageous rates of application of the active ingredient mixture are generally from 50 g to 2 kg a.i./ha, especially from 100 g to 1000 g of the a.i./ha, more especially from 250 g to 700 g a.i./ha. In the case of the treatment of seed, the rates of application are from 0.1 g to 500 g, preferably from 1 g to 100 g, most preferably from 5 g to 50 g of the a.i. per 100 kg of seed.

The methods and compositions of the invention may be used with crops or decorative plants and are particularly useful for treating commercially important crops. Such plants or crops include, but are not limited to dicots, which include for example spring and winter wheat, legumes such as soybeans or beans, and solanaceae such as tomatoes, peppers and potatoes, as well as monocots, for example corn, onions, bulbs, rice, sorghum and turf.

Therefore, one embodiment of the present invention is a method for preparing the film-forming, crosslinked protein dispersion wherein a reaction mixture is applied to the seeds, which reaction mixture is obtainable from a process comprising the following steps A-H:
(A) dispersing about 5-50 wt.-%, preferably about 10-35% wt.-%, in particular about 10
   25 wt.-% of a film forming proteinaceous material in water,
(B) adjusting the pH-value to 5-9 and adding the auxiliary additives (components 2) and adding about 0,1-30 wt. -%, preferably about 1-25 wt.-%, in particular about 5-25
   wt.-% of a crosslinking agent, (all relative to the proteinaceous material) and
(C) allowing reaction between said proteinaceous material and a crosslinking agent, in particular glyoxal, a polyaziridine, polyanhydride, polyisocyanate, an epoxide or
   polyepoxide, preferably an epichlorohydrin-modified polyamine, epichlorohydrin-modified polyamide, epichlorohydrin-modified polyamidoamine or epichlorohydrin-modified amine-containing backbone polymer and any combination thereof.
(D) optionally adding about 1-40 wt.%, preferably about 5-20 wt-% of an ingredient of component (3), in particular a pesticide, most preferred a fungicide or insecticide,
(E) optionally adding about 0.1-10 wt.%, preferably 0.1-1 wt% of an ingredient of component (4), in particular a fertiliser,
(F) optionally adding about 0.001-5 wt%, preferably about 0.001-1 wt% of an ingredient
   of component (5), in particular a bioregulating additive,
(G) optionally adding about 0.1-15 wt% of an ingredient of component (6), in particular an additive increasing the fertiliser efficiency, plant productivity, growth and/ or nutrient accumulation, especially prefered about 1-5 wt % of a nutrient uptake enhancer, in particular about 1-5 wt % of Amisorb™ or Auxigrow™,
(H) optionally adding 0,1-15 wt% of an ingredient of component (7), in particular an adjuvant.

The chronological order of these steps may be modified if this is required because of better mixing of the components, e.g. the crosslinker (step C) may likewise be added last of all, or the steps D-H may be reversed.
The dispersion is then applied to the seeds by a standard seed treatment equipment as described above. Seeds to be treated using the compositions disclosed herein comprise within the scope of this invention e.g. the following species of plants, the list not representing any limitations:
- cereals (wheat, barley, rye, oats, rice, sorghum and related crops);
- beet (sugar beet and fodder beet);
- stone fruit and soft fruit (apples, pears, plums, peaches, almonds, cherries, strawberries, raspberries and blackberries);
- leguminous plants (beans, lentils, peas, soybeans);
- oil plants (rape, mustard, poppy, olives, sunflowers, coconut, castor oil plants, cocoa beans);
- cucumber plants (marrows, cucumbers, melons);
- fibre plants (cotton, flax, hemp, jute);
- citrus fruit (oranges, lemons, grapefruit, mandarins);
- vegetables (spinach, lettuce, asparagus, cabbages, carrots, onions, tomatoes, potatoes, paprika); - lauraceae (avocados, cinnamon, camphor);
- ornamental plants (flowers, shrubs, broad-leaved trees and evergreens, such as conifers).
- other plants such as maize, tobacco, nuts, coffee, sugar cane, tea, vines, hops, bananas and natural rubber plants,

The compositions according to the invention are especially advantageous for seed treatment of cereals (wheat, barley, rye, oats, rice, sorghum and related crops). By virtue of their high content of plant-derived proteins, the compositions according to the invention are distinguished by the fact that they are especially well tolerated by plants and are environmentally friendly.

The film-forming properties of the dispersions are conveniently evaluated by application of the compositions to solid surfaces like a glass pane and air-drying (or oven-drying at 60°C for ca. 10 min) of the wet films. The effect on seedling vigour and plant growth of a seed treatment according to the invention can be determined by measuring an increase in the plant numbers, length and weight of the respective plant species.

The invention will be further described by reference to the following detailed examples. These examples are not meant to limit the scope of the invention that has been set forth in the foregoing description. It should be understood that many variations and modifications may be made while remaining within the scope of the invention.

### Comparison example A:

In analogy to WO 97/36471 (Monsanto Company), two grams of gelatine, four grams of gypsum and 200 ml of hot water are thoroughly mixed. The cooled solution could not be used to prepare a stable film coating on solid surfaces, but the material was instantly washed off upon rinsing with some cold water.

### Example 1: Preparation of a proteinaceous film-forming seed treatment dispersion

Casein (50 g) was added to a mixture of 400 ml water and 12,5 ml 87% glycerol under continuous stirring. The pH was continuously adjusted to 9,0 using 25% ammonia. After all casein had dissolved, 20 g of soy protein isolate (Soya-L, Unisol L, Loders en Croklaan B.V., Wormerveer Holland, Netherlands) was slowly added to obtain a smooth dispersion. Then 3,5 ml of an aqueous glyoxal solution (40 wt-%, Clariant AG, Muttenz, Switzerland) and 3,5 ml of urea-formaldehyde resin (URSMV from BASF AG, Ludwigshafen, Germany) were added and the dispersion was held at 70°C for 30 minutes under stirring. After cooling to ambient temperature, 0,3 % of an antimicrobial agent (Proxel BZ®, Zeneca) was added. The viscosity of the dispersion obtained was about 480 cPs (measured with a Brookfield viscometer at 60 rpm).

### Example 2: Preparation of a proteinaceous film-forming seed treatment dispersion

Technical casein (750 g) was dissolved in 8 litres of water under continuous stirring at ambient temperature. The pH was continuously adjusted to 9,0 using 25% ammonia. After all casein had dissolved, 750 g of soy protein (Soya-L) was added. Then 300 ml of 87% glycerol and 75 g of guanidine hydrochloride were added. After complete dissolution of the guanidine, the dispersion was heated to 60°C and 300 ml of an aqueous glyoxal solution (40 wt-%, Clariant) was added. After 30 minutes reaction and cooling to ambient temperature, 0,3 % of an antimicrobial agent (Proxel BZ® Zeneca) was added.

### Example 3: Preparation of a proteinaceous film-forming seed treatment dispersion

150 g of 90 mesh technical casein (Havero Hoogwegt) was slowly added to 850 ml of water containing 15 ml Glycerol (87%, Merck) and 7,5 g of urea (Merck) while stirring. During the addition of the casein (roughly 10 g per minute), the pH was adjusted to 8,0 using a 25% ammonia solution. After complete dispersion of the protein, 1,5 g of Ca(OH)₂ was added very slowly under vigorous stirring. Then the dispersion was heated to 60°C while stirring. Then 7,5 ml of the polyaziridine crosslinker CX-100 (Zeneca, Waalwijk, Netherlands) were added and the dispersion was stirred for 30 min. After cooling, the dispersion has a viscosity of about 150-200 cP and a solids content of about 15%.

### Example 4: Preparation of a proteinaceous film-forming seed treatment dispersion

Technical casein (15 g, particle size 50 mesh, from Havero Hoogwegt BV, HB Gorinchem, Netherlands) was added to a mixture of 82 ml water (82 ml) and 3 ml 87% glycerol (Merck, Darmstadt, Germany) under continuous stirring. The pH was adjusted to 9,0 using 25% ammonia (total: 0,015 mol NH₃). After stirring for 20-30 minutes, all casein was dissolved and the solution was placed in a water bath at 70°C. The protein was crosslinked by the addition of 2,25 ml of an aqueous glyoxal solution (40 wt-%, Clariant AG, Muttenz, Switzerland) and further addition of 0,75 ml of methylbiphenyldiisocyanate (Merck, Germany). After cooling to ambient temperature, 0,3 ml of an antimicrobial agent (Proxel GXL®, Zeneca Specialities, Frankfurt, Germany) was added. The viscosity of the solution was about 300 cPs, as determined with a Brookfield viscosimeter.

### Example 5: Preparation of a proteinaceous film-forming seed treatment dispersion

150 g of 90 mesh technical casein (Havero Hoogwegt) was slowly added to 850 ml of water containing 15 ml glycerol (87%, Merck) and 7,5 g of urea (Merck) while stirring. The pH was adjusted to 9.0 with 25% ammonia solution. Then casein was added very slowly to avoid the formation of lumps (ca. 5-10 g per minute) under stirring and heating at 60°C. During the casein addition, the pH was kept constant at ca. 9.0 with the aqueous ammonia solution. Too much vigorous stirring would cause foaming which would lead to the formation of gas bubbles in the films. On the other hand, too little stirring would cause an inefficient formation of the desired protein dispersion. After complete dispersion of the protein, a 2% milky dispersion of Ca(OH)₂ (1.5 g) was added very slowly under vigorous stirring at 30°C. Then the dispersion was heated to 60°C while stirring. After cooling to ambient temperature, potassium sorbate (2.0 g, Nutrinova GmbH, Frankfurt) was added. The pH value was ca. 8-9. Directly after the preparation of this dispersion, or optionally prior to its application to the seeds, the polyepoxide reagent Kycoat® (Hercules Corp., Siegburg, Germany) was added. The amount of crosslinking reagent was adjusted to 5%, 10%, 15 and 25 wt-% relative to the protein content.

### Example 6: Preparation of a proteinaceous film-forming seed treatment dispersion

The same dispersion was prepared as described in example 3. In addition, several portions were mixed at room temperature with 0.1 %, 0.3%, 0.5%, 1% and 1.5% the polyepoxide reagent Kycoat® (Hercules Corp., Siegburg, Germany). With increasing amounts of this crosslinking agent, the water resistance of the film coating was considerably improved.

### Example 7: Physical characterisation of the proteinaceous film-forming seed treatment dispersions

When applied to surfaces, like on a glas pane, the dispersions prepared according to examples 1-6 gave hard and clear films after air-drying for 1-4 hours or after short drying in an oven (at ca. 60°C for ca. 5-10 min). They had an excellent scratch resistance and tight adhesion.
Test (A): Coatings were dipped into water for at least 48 hours without detaching from the surface. The coated metal plates coated with the protein formulations could also be dipped into 0,05 M Tris buffer at pH = 9,0 at 50°C for at least one hour. In order to examine the properties of the film in the presence of a protease, as secreted by soil organisms, a commercially available proteolytic enzyme preparation (Subtilisin®, 2% of an aqueous solution, from Carlsberg, Denmark) was applied. As a consequence, the coating could be easily wiped off with a nylon brush after impregnation for 6 hours.
Test (B): A dispersions was as prepared as described in example 5. Therefrom films were prepared on glass panes (300 µm wet) and dried for 10 minutes at 80°C. A constant stream of water (50 liters per hour) was rinsed over the film during 16 hours. The resulting %-decrease of the film thickness was determined to be as follows:
   a) 8% after 4 hours
   b) 15% after 8 hours
   c) 29% after 12 hours
   d) 29% after 16 hours
Test (C ): A dispersions was as prepared as described in example 5. Films were prepared on glass panes (300 µm wet) and dried for 15 minutes at 50°C. The coated glass panes were put on a hotplate for 15 minutes to observe the thermal stability of the films.
   a) 25°C: clear film
   b) 125°C: slightly yellow
   c) 165°C: brown
   d) 190°C: dark brown
   e) 250°C: black, decomposition
Test (D): A dispersions was as prepared as described in example 5.(400µm wet). The scrubbing brush test according to DIN 53 778 destroyed the film after 50 brushing cycles.

### Example 8: Treatment of seeds

The film forming protein dispersion prepared according to the following examples were applied to the seeds by using the Rotostat M150 (J.E. Elsworth Ltd. , Norfolk, UK). Inspection of the treated seeds showed that the coatings were uniformly present all over the seed surface area.

### Example 9: Preparation and testing of seed treatment compositions containing a bioregulator of category (d)

The film forming protein dispersion of example 5 was either taken as such, or the category (d) bioregulator Amisorb® from Donlar Corporation (Chicago, USA) was added by thoroughly mixing the commercially available concentrate (ca. 50% a.i.) with the dispersion to obtain the content of 3.8% of Amisorb® by weight. An amount of 400 mg (500 µl) of each composition was used to treat each 100 g of corn seeds. In addition, the treatment compositions were mixed with Colanyl Red® (Clariant, Muttenz) to obtain a content of this dye, a catagory (e) component, of about 4.5 wt%. Plant growth was monitored in 3 groups of planting pots containing 136 plants in each group (control, treated with protein composition, treated with protein composition + Amisorb®), by using authentic, untreated, non-sterilised soil from the farmland located in Frankfurt/Höchst (Germany). All plants received artificial sun light for 8 hours per day and 12.3 ml of water once per day, corresponding to 450 mm/year rainfall, at a temperature range of about 22-27°C. After 14 days the plants were harvested and seedling numbers, length and weight were immediately determined. The results shown in the figure indicate - within reasonable limits of error - that the protein dispersion alone (left bars) provides an about equal benefit (improved seedling vigour parameters) as the bioregulator Amisorb® containing treatment composition.

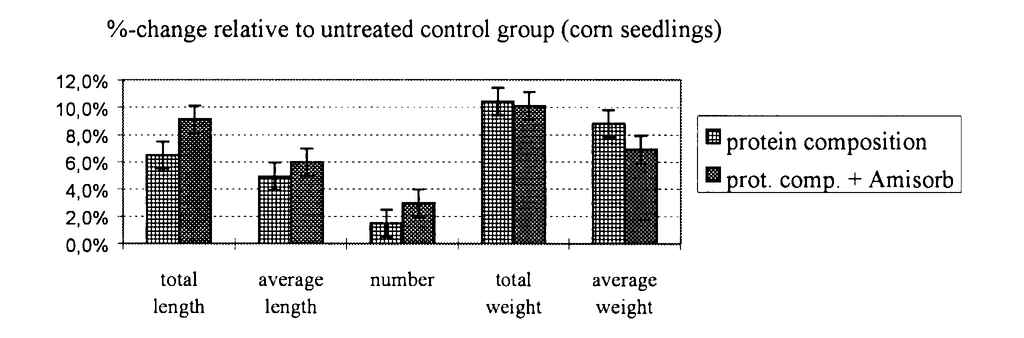

### Example 10: Preparation and testing of a seed treatment composition containing a fungicide

A film forming protein dispersion containing 20 wt-% relative to the protein content of the respective crosslinker solution, prepared analogously as described in example 5, was used. Three different seed treatment compositions were prepared and tested against a control group of untreated summer wheat, variety *Munk* in plant pots, each filled with ca. 1 kg untreated, non-sterilised soil from the farmland located in Frankfurt/Höchst (Germany). In detail, the treatment formulations were composed as follows:
a) Standard fungicide seed treatment formulation
   - 100 g Wurzelschutz (Agrevo UK, Chesterford Park), contained 16.7 g fluquinconazole and 2.6 g other solids (mainly Colanyl Red® dye) in an aqueous dispersion;
b) Film-forming protein composition + fluquinconazole:
   - 35.9 g Jockey Flex® Agrevo UK, Chesterf. Park), contained 15.7 g wet-milled fluquinc.;
   - 4.6. g aqueous dispersion Colanyl Red® as (ca. 1.5 g of dye);
   - 59.5 g of the protein dispersion.
c) Film-forming protein composition:
   - 4.6. g aqueous dispersion Colanyl Red® as (ca. 1.5 g of dye);
   - 59.5 g of the protein dispersion.
   - 35.9 g water

An amount of 400 mg (500 µl) of each composition was used to treat each 100 g of wheat seeds. Each group was composed of 12 pots, each to be planted with 9 seeds, the fourth group being the untreated seeds. All plants received artificial sun light for 8 hours per day and 11.8 ml of water once per day, corresponding to 430 mm/year rainfall. After 12 days the plants were harvested and seedling numbers, length and weight were immediately determined. The results shown in the figure indicate - within the given limits of error - that the standard fungicide formulation and the protein composition without fungicide both had small effects on seedling vigour, whereas both in combination considerably enhanced all seedling vigour parameters.

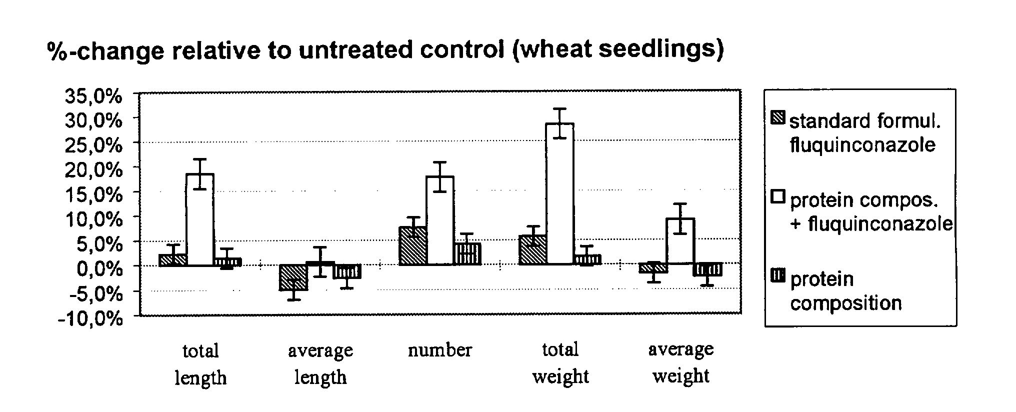

### Example 11: Preparation and testing of a seed treatment composition containing a fungicide and a bioregulator

A film forming protein dispersion containing 20 wt-% relative to the protein content of the respective crosslinker solution, prepared analogously as described in example 5, was used. Three different seed treatment compositions were prepared and tested against a control group of untreated summer wheat, variety *Munk* in plant pots, each filled with ca. 1 kg untreated, non-sterilised soil from the farmland located in Frankfurt/Höchst (Germany). In detail, the treatment compositions had the following compositions:
a) Standard fungicide seed treatment formulation + Amisorb®:
   - 19.09 g Wurzelschutz (Agrevo UK, Chesterford Park), contained ca. 3.2 g fluquinconazole and 0.5 g Colanyl Red® dye as aqueous dispersion;
   - 0.910 g, of the category (d) bioregulator Amisorb® (Donlar Corp., Chicago, USA), contained ca. 50% of the a.i.;
b) Film-forming protein composition + fluquinconazole + Amisorb®:
   - 6.85 g Jockey Flex® (Agrevo UK, Chesterf. Park), contained 3.0 g wet-milled fluquincon.;
   - 0.88 g Colanyl Red® dye as an aqueous dispersion;
   - 0.92 g, of the category (d) bioregulator Amisorb® (Donlar Corp., Chicago, USA), contained ca. 50% of a.i.;
   - 11.67 g of the protein dispersion.
c) Film-forming protein composition + Amisorb®:
   - 0.88 g Colanyl Red® dye as an aqueous dispersion;
   - 0.92 g, of the category (d) bioregulator Amisorb ® (Donlar Corp. ,Chicago, USA), contained ca. 50% of a.i.;
   - 11.67 g of the protein dispersion.

An amount of 400 mg (500 µl) of each composition was used to treat each 100 g of wheat seeds. Each group comprised 12 pots, each to be planted with 9 seeds, the fourth group being the untreated seeds. All plants received artificial sun light for 8 hours per day and 12.4 ml of water once per day, corresponding to 453 mm/year rainfall. After 14 days the plants were harvested and seedling numbers, length and weight were immediately determined. The results shown in the figure indicate that the protein composition is superior to the standard formulation, in particular the synergistic effects on seedling vigour parameters are provided by the composition containing both the fungicide and Amisorb®.

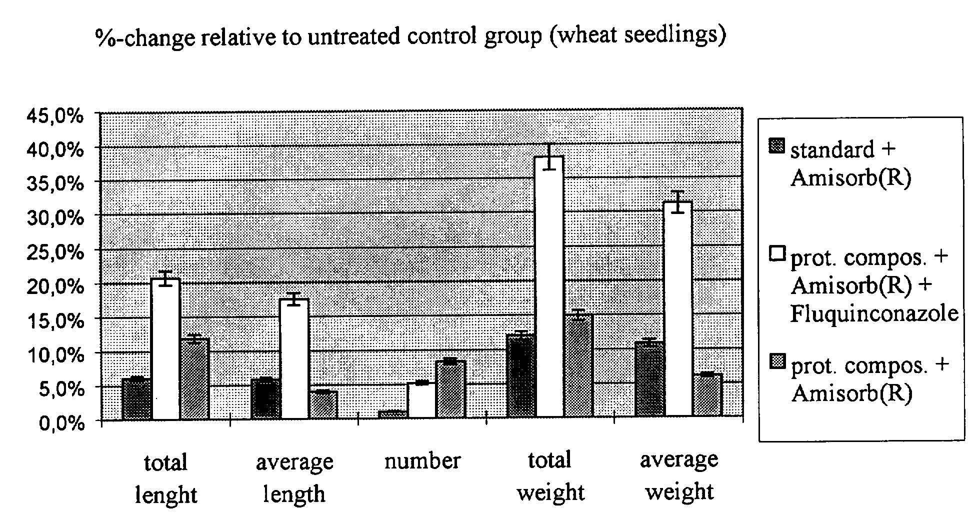

### Example 12: Preparation of an insecticide seed treatment composition

The film forming protein dispersion of example 5 is thoroughly mixed either with 300 g of Fipronil® (Rhone-Poulenc) or with 320 g of Gaucho® (imidacloprid, Bayer AG) to provide the respective insecticide seed treatment compositions.

### Example 13: Measurement of fungicide controlled release

Two distinct coatings (300 µm wt application on glass panes) were prepared analogously as described in Example 7(B):
a) only composed of the wet milled aqeous fluquinconazole dispersion from Agrevo (Chesterford Park, UK, sample-Nr. FD 32033).
b) 3.2 g of the same dispersion as in a) mixed with 4.4 g of the respective protein dispersion and diluted with 2.4 ml water.

After drying both glass panes were immersed in a pot containing 0.8 l of water (70 cm² immersed). Samples were taken from time to time (syringe filter 0.45 µm) and analysed by HPLC (222 nm). The coating not containing the protein dispersion immediately released the fungicide up to the saturation concentration (ca. 1.1 mg/l) whereas the protein-containing coating gave the release profile shown in the figure.

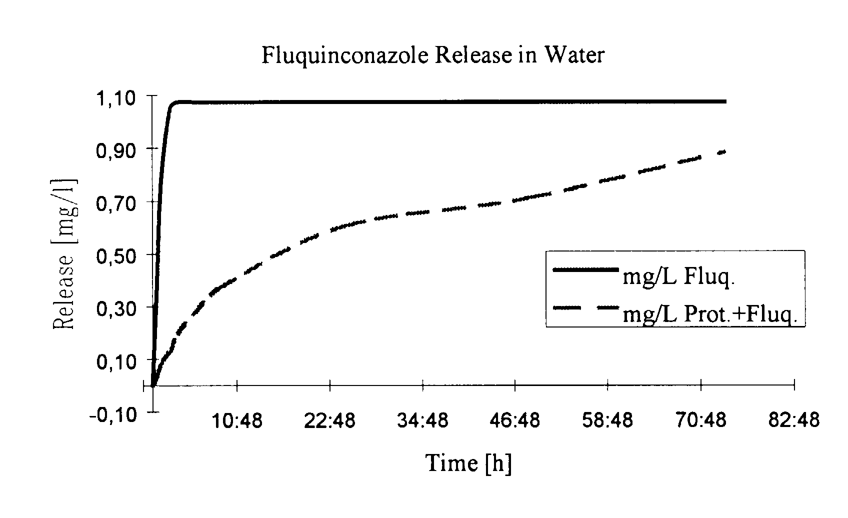

## Claims

1. An aqueous film forming seed treatment composition comprising
a. 5-50 wt.-% of a film forming crosslinked proteinaceous material and
b. 0.001-50 wt.-% of other active ingredients selected from the following group: pesticides, fertilisers, bioregulating additives, additives for increasing the fertiliser efficiency, plant productivity, growth and nutrient accumulation and adjuvants or any combination thereof.

2. A seed treatment composition according to claim 1, wherein said proteinaceous material is selected from an animal-, plant- and/or microbe-derived protein, preferably from keratin, gelatine, collagen, gluten, soy protein, casein, or any combination thereof.

3. A seed treatment composition according to any of the preceding claims , wherein said composition comprises further auxiliary additives selected from the following group: surface active compounds, urea, acids, bases, plasticisers, continuous phase carriers or combinations thereof.

4. A seed treatment composition according to claim 3, wherein the composition comprises a plasticiser in an amount of 5-50 wt.% with respect to the dry protein weight.

5. A seed treatment composition according to any of the preceding claims, wherein water is used as a continuous phase carrier.

6. A seed treatment composition according to any of the preceding claims, wherein the proteinaceous material has been crosslinked with a crosslinking agent selected from formaldehyde; glyoxal; glutaraldehyde; diisocyanate; a (poly)isocyanate; a bis(meth)acrylate, preferably N,N-ethylenebis(meth)acrylamide; a (poly)aziridine; a carbodiimide; a resin, preferably melamine-formaldehyde (MF), urea-formaldehyde (UF), benzoguanidine-formaldehyde; a diglycidyl ether, a glycidyl ester; a polyvalent cation, preferably calcium or zinc; an acetoacetate or a (poly)epoxide, preferably a polyaziridine or a polyepoxide, most preferably an epichlorohydrin-modified polyamine, epichlorohydrin-modified polyamide, epichlorohydrin-modified polyamidoamine or epichlorohydrin-modified amine-containing backbone polymer; or any combination thereof.

7. A seed treatment composition according to any of the preceding claims , wherein a pesticide, preferably a fungicide, insecticide, acaricide, herbicide, an antidote or a safener is contained, or any combination thereof.

8. A seed treatment composition according to any of the preceding claims, wherein the bioregulator contained is Amisorb® and/or Auxigrow®.

9. A method for preparing an aqueous film forming seed treatment composition , by
a. dispersing 5-50 wt.-% of a film forming proteinaceous material in water,
b. adjusting the pH-value to 5-9, adding auxiliary additives and adding 0,1-25wt.-% of a crosslinking agent, relative to the proteinaceous material, and
c. allowing reaction between said proteinaceous material and a crosslinking agent
d. optionally adding about 1-40 wt.%, of a pesticide, preferably a fungicide or insecticide
e. optionally adding about 0.1-10 wt.%, of a fertiliser,
f. optionally adding about 0.001-5 wt% of a bioregulating additive
g. optionally adding about 0.1-15 wt% of an additive increasing the fertiliser efficiency, plant productivity, growth and/or nutrient accumulation,
h. optionally adding 0,1-15 wt.% of an adjuvant,
wherein the chronological order of the steps a-h may be modified if this is required because of better mixing of the components.

10. A method according to claim 9, wherein in step g 1-5 wt % of a nutrient uptake enhancer, in particular about 1-5 wt % of Amisorb™ or Auxigrow™ are added.

11. A method according to claim 9, wherein a crosslinking agent selected from formaldehyde; glyoxal; glutaraldehyde; diisocyanate; a (poly)isocyanate; a bis(meth)acrylate, preferably N,N-ethylenebis(meth)acrylamide; a (poly)aziridine; a carbodiimide; a resin, preferably melamine-formaldehyde (MF), urea-formaldehyde (UF), benzoguanidine-formaldehyde; a diglycidyl ether, a glycidyl ester; a polyvalent cation, preferably calcium or zinc; an acetoacetate or a (poly)epoxide, preferably a polyaziridine or a polyepoxide, most preferably an epichlorohydrin-modified polyamine, epichlorohydrin-modified polyamide is employed.

12. A method for applying a seed treatment composition according to any of the preceding claims to seeds by spraying, dipping or brushing in a seed treatment machine.

13. Seed treated by using a seed treatment composition according to the claims 1-8.

14. Seed according to claim 14, wherein said seed are selected from cereals like wheat, barley, rye, oats, rice or sorghum, sugar beet or fodder beet, stone fruits or soft fruits like apples, pears, plums, peaches, almonds, cherries, strawberries, raspberries or blackberries, leguminous plants like beans, lentils, peas, soybeans, oil plants like rape, mustard, poppy, olives, sunflowers, coconut, castor oil plants or cocoa beans, cucumbers, melons, fibre plants like cotton, flax, hemp or jute, citrus fruits like oranges, lemons, grapefruits or mandarins, or vegetables like spinach, lettuce, asparagus, cabbages, carrots, onions, tomatoes, potatoes, paprika, or lauraceae like avocados, cinnamon or camphor, ornamental plants like flowers, shrubs, broad-leaved trees and evergreens, such as conifers, or other plants such as maize, tobacco, nuts, coffee, sugar cane, tea, vines, hops, bananas and natural rubber plants.
